# EUROPÄISCHE PATENTANMELDUNG

(11) **EP 3 735 858 A1**
(43) Veröffentlichungstag der Anmeldung: **11.11.2020**
(21) Anmeldenummer: 20173885.3
(22) Anmeldetag: 11.05.2020
(51) Int. Cl.: A46B 5/00, A46B 9/00, A46B 9/04, A46B 17/04, A46D 1/00, G02C 13/00

(54) **BRILLENGLASREINIGUNGSVORRICHTUNG**

(30) Priorität: 10.05.2019 DE 202019102630 U
(71) Anmelder: Alfa Licensing UG, 86825 Bad Wörishofen (DE)
(72) Erfinder: Balga, Wolfgang, 86825 Bad Wörishofen (DE)
(74) Vertreter: Wittmann, Günther

(57) **Zusammenfassung**

Die Erfindung offenbart eine Brillenglasreinigungsvorrichtung (100), aufweisend einen Bürstenbereich (102) mit einer Mehrzahl Fasern, die Borsten bilden, wobei die Mehrzahl Fasern organische Fasern aufweisen und wobei der Bürstenbereich (102) an einem ersten Bereich der Brillenglasreinigungsvorrichtung (100) angeordnet ist und ein Griffbereich (106) an einem zweiten Bereich angeordnet ist, der dem ersten Bereich entgegengesetzt ist und wobei der Griffbereich (106) hohl ausgebildet ist, der erste Bereich (102) vom Griffbereich (106) trennbar ist und der erste Bereich im Griffbereich (106) anordenbar ist.

## Beschreibung

### Gebiet der Erfindung

Die Erfindung betrifft eine Brillenglasreinigungsvorrichtung zum Reinigen der Gläser einer Brille.

### Stand der Technik

Gläser von Brillen werden meistens mittels Tücher gereinigt. Es sind trockene Tücher, beispielweise Mikrofasertücher bekannt. Diese haben den Nachteil, dass sie nach längerer Benutzung die Verschmutzung der Gläser nicht von den Gläsern entfernen, sondern lediglich verteilen.

Es sind auch feuchte Brillenputztücher bekannt. Diese haben den Nachteil, sie zu einer Bildung von Schlieren neigen.

Es ist auch bekannt, eine Reinigungsflüssigkeit auf die Brillengläser zu sprühen und die Flüssigkeit anschließend von den Gläsern zu wischen. Auch hierbei können Schlieren entstehen.

### Allgemeine Beschreibung der Erfindung

Die Erfindung stellt sich zur Aufgabe, eine Brillenglasreinigungsvorrichtung anzugeben, die die Nachteile des Standes der Technik überwindet, insbesondere eine Verteilung der Verschmutzung der Gläser und/oder Schlierenbildung vermeidet. Die Aufgabe der Erfindung wird durch eine Brillenglasreinigungsvorrichtung nach Anspruch 1 gelöst. Die abhängigen Ansprüche sind auf bevorzugte Ausführungsformen gerichtet.

Die Brillenglasreinigungsvorrichtung umfasst einen Bürstenbereich mit einer Mehrzahl Fasern, die Borsten bilden, Mehrzahl Fasern, wobei die Mehrzahl Fasern organische Fasern aufweisen. Mittels der Borsten und Wasser können die Brillengläser gereinigt werden. Der Nutzer kann die Brillenglasreinigungsvorrichtung wie eine Bürste einsetzen. Die Fasern reiben die Verunreinigung von dem Brillenglas, ohne dieses zu verkratzen.

Da die Borsten weiche organische Fasen aufweisen, werden die Brillengläser nicht beschädigt.

Der Erfinder hat überraschend festgestellt, dass sich Brillengläser ohne Tücher reinigen lassen. Die erfindungsgemäße Bürste und fließendes Wasser genügen, um die Brillengläser zu reinigen. Optional kann Seife die Reinigung der Brillengläser unterstützen.

Die organischen Fasern können bei einer Ausführungsform pflanzliche Fasern umfassen.

Bei einer weiteren Ausführungsform können die pflanzlichen Fasern Bambusfasern umfassen.

Bei einer alternative Ausführungsform können die organischen Fasern Haare eines Säugetiers umfassen.

Die Haare eines Säugetiers können Ziegenhaare umfassen.

Der Bürstenbereich kann an einem ersten Bereich der Brillenglasreinigungsvorrichtung angeordnet sein, und ein Griffbereich kann an einem zweiten Bereich angeordnet sein, der dem ersten Bereich entgegengesetzt ist. Der Griffbereich kann von einer Hand des Benutzers umschlossen werden. Der Nutzer kann die Brillenglasreinigungsvorrichtung wie eine Bürste einsetzen. Die Fasern reiben die Verunreinigung von dem Brillenglas.

Am Griffbereich sind keine Fasern angeordnet.

Bei einer Ausführungsform sind zwischen dem Griffbereich und dem Borstenbereich ein stielförmiges Element oder ein stabförmiges Element angeordnet. Bei dieser Ausführungsform ist die Hand des Benutzers vom Brillenglas entfernt, so dass die Hand des Benutzers das Brillenglas bei der Wischbewegung nicht verschmutzen kann,
Bei einer Ausführungsform ist der Griffbereich hohl ausgebildet, der erste Bereich vom Griffbereich trennbar ist und der erste Bereich im holen Griffbereich anordenbar. Dadurch kann die Brillenglasreinigungsvorrichtung platzsparend und vor Verschmutzung geschützt transportiert werden.

### Kurze Beschreibung der Figur

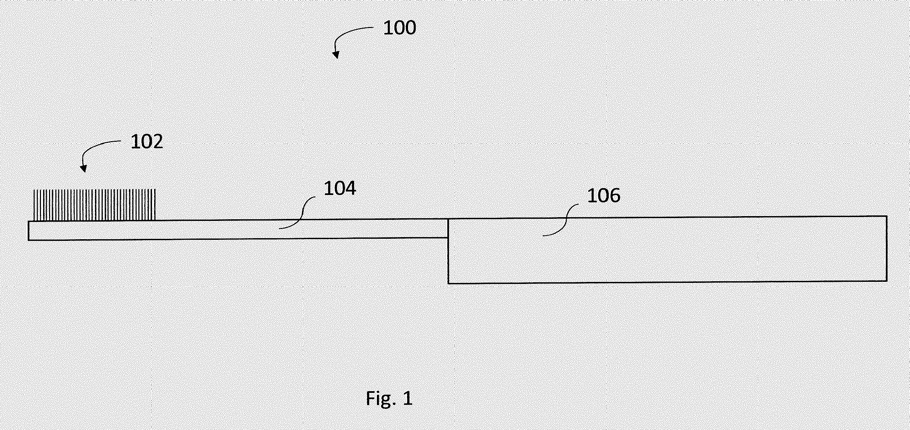

Die Erfindung wird anschließend unter Bezugnahme auf die Figur beschrieben, die eine exemplarische und nicht beschränkende Ausführungsform der Erfindung zeigt, wobei
Figur 1 eine Seitenansicht der Erfindung zeigt.

### Detaillierte Beschreibung der Erfindung

Figur 1 zeigt eine Brillenglasreinigungsvorrichtung 100 mit einem Borstenbereich 102, einem Stielbereich 104 und einem Griffbereich 106. Der Borstenbereich 102 umfasst eine Mehrzahl Borsten mit einer Mehrzahl Fasern. Die Borsten bzw. Fasern können aus Bambusfasern, Ziegenhaar oder aus einem beliebigen anderen Material hergestellt sein. Bevorzugt sind die Fasern aus pflanzlichen Fasern oder tierischen Haaren hergestellt.

Während des Reinigens der Brille schruppt der Nutzer mit den Spitzen der Fasern 102 über die Brillengläser, wobei gleichzeitig Wasser über die Brille läuft. Optional kann zusätzlich ein Spülmittel verwendet werden.

Nach der Verwendung kann der Stilbereich 104 vom Griffbereich getrennt werden und der Borstenbereich 102 und der Stilbereich 104 im holen Griffbereich 106 angeordnet werden.

Der Griffbereich 106 kann einen runden, rechteckigen oder quadratischen Querschnitt aufweisen. Der Griffbereich 106 und/oder der Stilbereich 104 können aus Kunststoff, Holz oder Metall hergestellt werden.

Der Erfinder der vorliegenden Erfindung hat erkannt, dass Brillengläser mittels Waser und Borsten 102 mit weichen pflanzlichen oder tierischen Fasern gereinigt werden können.

## Patentansprüche

1. Brillenglasreinigungsvorrichtung (100), aufweisend einen Bürstenbereich (102) mit einer Mehrzahl Fasern, die Borsten bilden, wobei die Mehrzahl Fasern organische Fasern aufweisen.

2. Brillenglasreinigungsvorrichtung (100) nach Anspruch 1, wobei die organischen Fasern pflanzliche Fasern umfassen.

3. Brillenglasreinigungsvorrichtung (100) nach Anspruch 2, wobei die pflanzlichen Fasern Bambusfasern umfassen.

4. Brillenglasreinigungsvorrichtung (100) nach Anspruch 1, wobei die organischen Fasern Haare eines Säugetiers umfassen.

5. Brillenglasreinigungsvorrichtung (100) nach Anspruch 4, wobei die Haare eines Säugetiers Ziegenhaare umfassen.

6. Brillenglasreinigungsvorrichtung (100) nach einem der Ansprüche 1 bis 4, wobei der Bürstenbereich (102) an einem ersten Bereich der Brillenglasreinigungsvorrichtung (100) angeordnet ist und ein Griffbereich (106) an einem zweiten Bereich angeordnet ist, der dem ersten Bereich entgegengesetzt ist.

7. Brillenglasreinigungsvorrichtung (100) nach Anspruch 6, wobei am Griffbereich (106) keine Fasern angeordnet sind.

8. Brillenglasreinigungsvorrichtung (100) nach Anspruch 6 oder 7, wobei zwischen Griffbereich (106) und erstem Bereich (102) ein stielförmiges Element (104) oder stabförmiges Element (104) angeordnet ist.

9. Brillenglasreinigungsvorrichtung (100) nach einem der Ansprüche 6 bis 8, wobei der Griffbereich (106) hohl ausgebildet ist, der erste Bereich (102) vom Griffbereich (106) trennbar ist und der erste Bereich im Griffbereich (106) anordenbar ist.
